# EUROPEAN PATENT APPLICATION

(11) **EP 3 742 335 A1**
(43) Date of publication of application: **25.11.2020**
(21) Application number: 20159033.8
(22) Date of filing: 24.02.2020
(51) Int. Cl.: G06K 9/00, G06K 9/46, G06K 9/38

(54) **COMMODITY RECOGNITION DEVICE AND COMMODITY RECOGNITION METHOD**

(30) Priority: 21.05.2019 JP 2019095404
(71) Applicant: Toshiba TEC Kabushiki Kaisha, Shinagawa-ku Tokyo 141-8562 (JP)
(72) Inventor: Nobuoka, Tetsuya, Tokyo, 141-8562 (JP); Ariga, Norimasa, Tokyo, 141-8562 (JP); Yasunaga, Masaaki, Tokyo, 141-8562 (JP)
(74) Representative: Hoffmann Eitle

(57) **Abstract**

According to one embodiment, a commodity recognition device includes a first interface, a second interface, and a processor. The first interface acquires an image captured by a camera for which a region including a mounting surface on which a commodity to be recognized is mounted is set to be an imaging region. The second interface outputs an image for display to a display device that displays an image on the mounting surface. The processor generates a background image to be displayed on the mounting surface on the basis of a first image captured by the camera and acquired by the first interface, acquires a second image captured by the camera using the first interface in a state where the background image to be output as the image for display from the second interface is displayed on the mounting surface by the display device, and specifies a region of a commodity mounted on the mounting surface from the second image.

## Description

### CROSS-REFERENCE TO RELATED APPLICATION

This application is based upon and claims the benefit of priority from Japanese Patent Application No. 2019-095404, filed on May 21, 2019, the entire contents of which are incorporated herein by reference.

### FIELD

Embodiments described herein relate to a commodity recognition device and a commodity recognition method.

### BACKGROUND

Commodity recognition devices that recognize a plurality of commodities (objects) from captured images obtained by cameras are commercialized. Commodity recognition devices generally recognize commodities through template matching (pixel matching), comparison between local features (local feature values and the like), or the like. A commodity recognition device may perform a process of specifying a region of a commodity in order to limit a region to be recognized as preprocessing.

In the related art, a technique for specifying a region of a commodity in an image includes a method of specifying a commodity region using depth information, a background difference, or the like. However, in a method of specifying a commodity region from depth information, there is a possibility that the accuracy of region specification may be lowered because the accuracy of measurement of a depth is generally reduced near an edge of an object. Further, in a method of specifying a commodity region using a background difference, the accuracy of specification of a commodity region is reduced when a difference between an image of a background and an image of a commodity is small. In addition, the method of specifying a commodity region using a background difference is generally weak against background fluctuations, and there is also a possibility that the accuracy of specification of a region of a commodity will be lowered due to a change in external light or a lighting environment.

### SUMMARY OF THE INVENTION

One of the objects of the present invention is to improve prior art techniques and overcome at least some of the prior art problems as for instance above illustrated.

According to a first aspect of the invention, it is provided a commodity recognition device, comprising: a first interface which acquires an image captured by a camera for which a region including a mounting surface on which a commodity to be recognized is mounted is set to be an imaging region; a second interface which outputs an image for display to a display that displays an image on the mounting surface; and a processor which generates a background image to be displayed on the mounting surface on the basis of a first image captured by the camera and acquired by the first interface, acquires a second image captured by the camera using the first interface in a state where the background image to be output as the image for display from the second interface is displayed on the mounting surface by the display, and specifies a region of a commodity mounted on the mounting surface from the second image.

Optionally, in the device according to the first aspect of the invention, the processor further searches for a color distinguishable from the commodity mounted on the mounting surface from the first image, and generates a background image to be displayed on the mounting surface using the color.

Optionally, in the device according to the first aspect of the invention, the processor further divides the first image into a plurality of regions, and generates a background image to be displayed on the mounting surface using a color selected for each of the regions obtained by the division.

Optionally, in the device according to the first aspect of the invention, the processor further determines a pattern distinguishable from the commodity mounted on the mounting surface from the first image, and generates a background image to be displayed on the mounting surface using the pattern.

Optionally, in the device according to the first aspect of the invention, the processor searches for a pixel value indicating a color which is not present in the image from the first image.

Optionally, in the device according to the first aspect of the invention, the camera is positioned above the mounting surface.

Optionally, the device according to the first aspect of the invention further comprises a detector which detects that the commodity is present or absent on the mounting surface.

According to a second aspect of the invention, it is provided a commodity recognition method, comprising: acquiring a first image captured by a camera for which a region including a mounting surface on which a commodity to be recognized is mounted is set to be an imaging region; generating a background image to be displayed on the mounting surface on the basis of the first image captured by the camera; displaying the background image on the mounting surface; acquiring a second image captured by the camera in a state where the background image is displayed on the mounting surface; and specifying a region of a commodity mounted on the mounting surface from the second image.

Optionally, the method according to the second aspect of the invention further comprises searching for a color distinguishable from the commodity mounted on the mounting surface from the first image, and generating a background image for display on the mounting surface using the color.

Optionally, the method according to the second aspect of the invention further comprises dividing the first image into a plurality of regions, and generating a background image for display on the mounting surface using a color selected for each of the regions obtained by the division.

Optionally, the method according to the second aspect of the invention further comprises determining a pattern distinguishable from the commodity mounted on the mounting surface from the first image, and generating a background image for display on the mounting surface using the pattern.

Optionally, the method according to the second aspect of the invention further comprises searching for a pixel value indicating a color which is not present in the image from the first image.

Optionally, the method according to the second aspect of the invention further comprises detecting the presence or absence of the commodity on the mounting surface.

According to a third aspect of the invention, it is provided a self-checkout machine, comprising: a settlement processing component; a first interface which acquires an image captured by a camera for which a region including a mounting surface on which a commodity to be recognized is mounted is set to be an imaging region; a second interface which outputs an image for display to a display that displays an image on the mounting surface; and a processor which generates a background image to be displayed on the mounting surface on the basis of a first image captured by the camera and acquired by the first interface, acquires a second image captured by the camera using the first interface in a state where the background image to be output as the image for display from the second interface is displayed on the mounting surface by the display, and specifies a region of a commodity mounted on the mounting surface from the second image.

Optionally, in the self-checkout machine according to the third aspect of the invention, the processor further searches for a color distinguishable from the commodity mounted on the mounting surface from the first image, and generates a background image to be displayed on the mounting surface using the color.

Optionally, in the self-checkout machine according to the third aspect of the invention, the processor further divides the first image into a plurality of regions, and generates a background image to be displayed on the mounting surface using a color selected for each of the regions obtained by the division.

Optionally, in the self-checkout machine according to the third aspect of the invention, the processor further determines a pattern distinguishable from the commodity mounted on the mounting surface from the first image, and generates a background image to be displayed on the mounting surface using the pattern.

Optionally, in the self-checkout machine according to the third aspect of the invention, the processor searches for a pixel value indicating a color which is not present in the image from the first image.

Optionally, in the self-checkout machine according to the third aspect of the invention, the camera is positioned above the mounting surface.

Optionally, the self-checkout machine according to the third aspect of the invention further comprises a detector which detects that the commodity is present or absent on the mounting surface.

### DESCRIPTION OF THE DRAWINGS

FIG. 1 is a schematic diagram showing a configuration example of appearance of a commodity recognition device according to an embodiment;
FIG. 2 is a diagram showing a state where the commodity is mounted on a commodity mounting stand of the commodity recognition device;
FIG. 3 is a block diagram showing a configuration example of a control system of the commodity recognition device;
FIG. 4 is a flowchart showing a flow of a commodity recognition process performed by a commodity recognition device according to a first embodiment;
FIG. 5 is a diagram showing an example of color analysis for an image which is performed by the commodity recognition device;
FIG. 6 is a diagram showing an example of a commodity to be recognized by a commodity recognition device according to a second embodiment;
FIG. 7 is a schematic diagram showing an example in which a different image is displayed for each of a plurality of regions on a mounting surface on which a commodity is mounted in the commodity recognition device;
FIG. 8 is a flowchart showing a flow of a commodity recognition process performed by the commodity recognition device;
FIG. 9 is a diagram showing another example of color analysis for an image of each region in the commodity recognition device;
FIG. 10 is a flowchart showing a flow of a commodity recognition process performed by a commodity recognition device according to a third embodiment;
FIG. 11 is a diagram showing an example of a commodity to be recognized by the commodity recognition device;
FIG. 12 is a diagram showing an example of a straight line detected by the commodity recognition device from a captured image of a commodity mounted on a mounting surface;
FIG. 13 is a diagram showing an example of a pattern displayed as a background on a mounting surface by the commodity recognition device;
FIG. 14 is a diagram showing an example of a process of determining a direction of a straight line as a pattern displayed on the mounting surface by the commodity recognition device;
FIG. 15 is a diagram showing another example of a pattern displayed as a background on the mounting surface by the commodity recognition device;
FIG. 16 is a diagram showing still another example of a pattern displayed as a background on the mounting surface by the commodity recognition device; and
FIG. 17 is a diagram showing still another example of a pattern displayed as a background on the mounting surface by the commodity recognition device.

### DETAILED DESCRIPTION

Embodiments provide a commodity recognition device and a commodity recognition method which are capable of improving the accuracy of commodity recognition are provided.

In general, according to one embodiment, a commodity recognition device includes a first interface, a second interface, and a processor. The first interface acquires an image captured by a camera for which a region including a mounting surface on which a commodity to be recognized is mounted is set to be an imaging region. The second interface outputs an image for display to a display device that displays an image on the mounting surface. The processor generates a background image to be displayed on the mounting surface on the basis of a first image captured by the camera and acquired by the first interface, acquires a second image captured by the camera using the first interface in a state where the background image to be output as the image for display from the second interface is displayed on the mounting surface by the display device, and specifies a region of a commodity mounted on the mounting surface from the second image.

Hereinafter, first, second and third embodiments will be described with reference to the accompanying drawings.

Commodity recognition devices according to each of embodiments to be described below detect a commodity (product) from a captured image obtained by a camera. The commodity recognition devices according to the embodiments are applied to, for example, a device that detects a region (commodity region) of a product which is a target for settlement from a captured image and recognizes a product from a specified commodity region. In addition, the commodity recognition device may be a device that detects a commodity region for specifying individual commodities present in a captured image in order to count the number of commodities.

### First Embodiment

First, a first embodiment will be described.

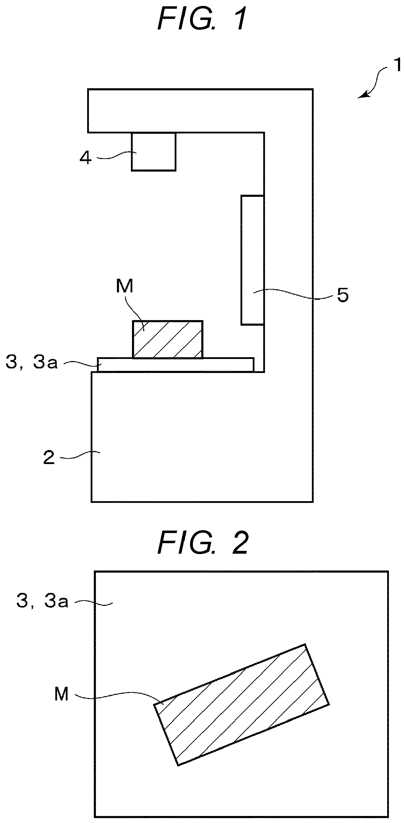

FIG. 1 is a schematic diagram showing a configuration example of the appearance of a commodity recognition device 1 according to the first embodiment.

As shown in FIG. 1, the commodity recognition device 1 includes a housing 2, a commodity mounting stand (display) 3, a camera 4, and an operation panel 5. The commodity recognition device 1 specifies a region of a commodity to be recognized and recognizes a commodity from the specified commodity region. The commodity recognition device 1 is mounted on a settlement device installed at, for example, a store that sells a product as an example of a commodity. In addition, the settlement device on which the commodity recognition device 1 is mounted may be a self-checkout machine operated by a user himself or herself. In addition, the settlement device on which the commodity recognition device 1 is mounted may be a checkout machine operated by a store clerk in a store.

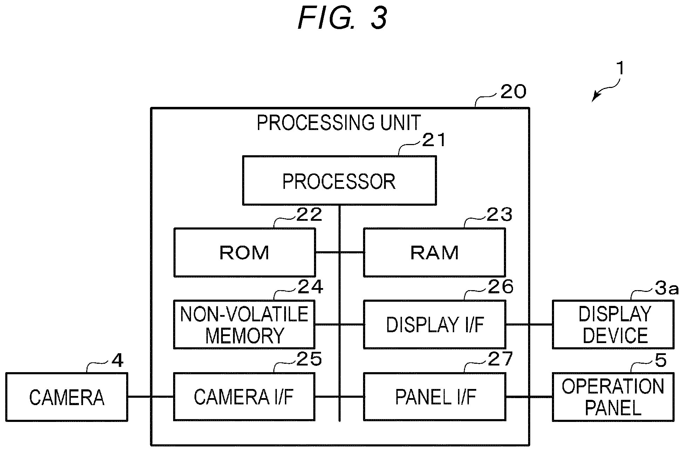

The housing 2 forms an external form of the commodity recognition device 1. The housing 2 may have a shape in which respective portions can be installed, and is not limited to a specific shape. In the example shown in FIG. 1, the housing 2 has a shape in which the camera 4 is installed above the commodity mounting stand 3. In addition, the housing 2 stores a computer including a processing unit 20 (see FIG. 3) including a processor, a storage unit, various interfaces, and the like. For example, a processing unit as a computer stored in the housing 2 realizes a process such as a commodity recognition process performed by the commodity recognition device 1.

The commodity mounting stand 3 includes a mounting surface on which a commodity to be recognized is mounted. The commodity mounting stand 3 includes a display device (display) 3a. The commodity mounting stand 3 is configured such that the mounting surface serves as a display screen of the display device 3a. That is, the mounting surface of the commodity mounting stand 3 on which a commodity M is mounted serves as a display screen of the display device 3a.

FIG. 2 is a diagram showing an example in which the mounting surface of the commodity mounting stand 3 on which the commodity M is mounted is viewed from above (installation of the camera 4).

The display screen as the mounting surface of the commodity mounting stand 3 is configured such that the commodity M to be recognized can be disposed, as shown in FIG. 2. A plurality of commodities to be recognized may be mounted on the mounting surface of the commodity mounting stand 3.

In addition, the mounting surface of the commodity mounting stand 3 as shown in FIG. 2 is set to fall within an imaging range of the camera 4. The display device 3a displays an image for display on the mounting surface (display screen) on which a commodity is mounted. The display device 3a is not limited to a specific shape as long as a mounting surface on which a commodity is mounted is used as a display screen and can be imaged by a camera above the commodity mounting stand 3. For example, the display device 3a may be directly installed at the housing 2 by making the display screen having a commodity mountable thereon face toward the camera 4 (above). In addition, the display device 3a is built in the housing 2, and may be installed under a transparent plate of, such as acryl, serving as a mounting surface.

The display device 3a of the commodity mounting stand 3 displays an image for display to be supplied from the processing unit 20 to be described later on the display screen. An image to be displayed on the mounting surface by the display device 3a of the commodity mounting stand 3 serves as a background image for the commodity M in a captured image obtained by the camera 4 that images the commodity M on the mounting surface from above. An image (background image) to be displayed on the mounting surface by the display device 3a is an image of a selected color, an image in which a color is set for each region obtained by the division, an image having a specific form, or the like as described in embodiments to be described later.

The camera 4 images a region including the mounting surface of the commodity mounting stand 3 as an imaging range. In the configuration example shown in FIG. 1, the camera 4 is installed to image the mounting surface of the commodity mounting stand 3 from above as shown in FIG. 2. The camera 4 may image the commodity M mounted on the mounting surface together with an image to be displayed on the display screen as the mounting surface in the commodity mounting stand 3. For example, the camera 4 is constituted by a CCD camera or the like. In addition, the camera 4 may be a plurality of cameras. The camera 4 is not limited to a specific configuration.

The operation panel 5 includes a display device (display) and an operation device. For example, the operation panel 5 is a display device including a touch panel as an operation device. In addition, the operation panel 5 may be provided with a keyboard, a numeric keypad, and the like together with the display device. Further, the operation panel 5 may receive an input of a gesture from a user. The operation panel 5 may be installed at any position.

Here, it is assumed that the operation panel 5 is a display device including a touch panel. In this case, the display device of the operation panel 5 includes a display panel such as a liquid crystal display or an organic EL display and a driving circuit that displays an image on the display panel. The operation device of the operation panel 5 is a user interface for an operator to input various operation instructions. The operation panel 7 transmits information indicating an operation instruction to be input by the operator to a processing unit.

Meanwhile, the commodity recognition device 1 may be realized as a settlement device including a settlement unit that settles a product to be recognized as a commodity. The settlement unit included in the settlement device as the commodity recognition device 1 may be a unit capable of settling the price of a product. In this case, the settlement unit may be a unit that processes a credit card or may be a unit that settles an amount of money with electronic money of an electronic apparatus such as a portable terminal or an IC card. In addition, the settlement unit may be a unit that processes cash.

In addition, the commodity recognition device 1 may include a detection unit that detects that a product is mounted on the commodity mounting stand 3. For example, the commodity recognition device 1 may start a commodity recognition process when the detection unit detects that a product is mounted on the mounting surface of the commodity mounting stand 3.

Next, a configuration example of a control system of the commodity recognition device 1 will be described.

FIG. 3 is a block diagram showing a configuration example of the control system of the commodity recognition device 1.

As shown in FIG. 3, the commodity recognition device 1 is configured such that the display device 3a, the camera 4, and the operation panel 5 are connected to the processing unit 20. The processing unit 20 includes a processor 21, a ROM 22, a RAM 23, a non-volatile memory 24, a camera I/F (first interface) 25, a display I/F (second interface) 26, a panel I/F (third interface) 27, and the like.

The processor 21 controls the overall commodity recognition device 1. The processor 21 is, for example, a CPU. The processor 21 realizes various processes on the basis of programs and control data stored in the ROM 22 and the non-volatile memory 24. For example, the processor 21 performs various processes such as the control of operation of the commodity recognition device 1 and a commodity recognition process by executing programs stored in the ROM 22.

Meanwhile, some of various functions realized by the processor 21 to be described later may be realized by hardware.

The ROM 22 is a non-volatile memory that stores control programs, control data, and the like in advance. The ROM 22 is embedded in the commodity recognition device 1 in a state where the ROM stores control programs, control data, and the like in a manufacturing stage. That is, the control programs and control data stored in the ROM 22 are embedded in accordance with specifications of the commodity recognition device 1 in advance.

The RAM 23 is a volatile memory. The RAM 23 functions as a working memory. For example, the RAM 23 temporarily stores data being processed by the processor 21. The RAM 23 stores application programs on the basis of commands received from the processor 21. In addition, the RAM 23 may store data required for execution of the application programs, results of the execution of the application programs, and the like.

The non-volatile memory 24 is constituted by a non-volatile memory in which data is writable and rewritable. For example, the non-volatile memory 24 is constituted by a hard disk drive (HDD), a solid state drive (SSD), an EEPROM (registered trademark), a flash ROM, or the like. The non-volatile memory 24 stores control programs, applications, and various data according to the use of operation of the commodity recognition device 1.

In addition, the non-volatile memory 24 includes a commodity database (DB) that stores information for recognizing a commodity. The commodity DB stores information regarding a commodity which is a target for a commodity recognition process. Meanwhile, the commodity DB may be provided in an external device communicable through a communication interface. For example, the commodity DB stores commodity information such as a commodity code, a commodity name, and a commodity classification and commodity specification information used for a commodity recognition process for each commodity to be recognized. The commodity specification information includes feature information for recognizing a commodity from a captured image, information (external form information) indicating an external form (contour) of a commodity, information (height information) indicating the height of a commodity, and the like. The external form information may be, for example, coordinates of four corners of a rectangular surface of a commodity. In addition, the external form information may be information indicating the shape of the contour of a commodity when the commodity disposed on the mounting surface of the commodity mounting stand 3 is viewed from above. In addition, the external form information may be information indicating an area when the commodity disposed on the mounting surface of the commodity mounting stand 3 is viewed from above.

The camera interface (I/F) 25 is an interface for connecting the camera 4 and the processing unit 20 to each other. The processor 21 and the camera 4 input and output data through the camera I/F 25. The camera I/F 25 functions as an image acquisition unit that acquires a captured image obtained by the camera 4. For example, the processor 21 instructs the camera 4 to capture an image through the camera I/F 25 and acquires the image captured by the camera 4.

The display interface (I/F) 26 is an interface for connecting the display device 3a included in the commodity mounting stand 3 and the processing unit 20 to each other. The processor 21 and the display device 3a input and output data through the display I/F 26. The display I/F 26 functions as an interface for supplying an image for display to be displayed on the display screen of the display device 3a by the processor 21. For example, the processor 21 may cause the display device 3a to give an instruction for a color to be displayed on the display screen through the display I/F 26. In addition, the processor 21 may cause the display device 3a to give an instruction for a pattern such as a form to be displayed on the display screen through the display I/F 26.

The panel interface (I/F) 27 is an interface for connecting the operation panel 5 and the processing unit 20 to each other. When the operation panel 5 includes a display device and an operation device, the panel I/F 27 includes an interface for connecting the processor 21 and the display device to each other and an interface for connecting the processor 21 and the operation device to each other. The display device of the operation panel 5 displays a screen on the basis of display control to be supplied from the processor 21 through the panel I/F 27. The operation device of the operation panel 5 such as a touch panel supplies input information to the processor 21 through the panel I/F 27.

Meanwhile, the commodity recognition device 1 may be provided with a speaker that generates a sound for giving a notice of a warning or the like. In this case, the processing unit 20 is provided with an interface for connection of the speaker. The speaker may generate a sound under the control of the processor 21 connected thereto through the interface.

Next, operations of the commodity recognition device 1 according to the first embodiment will be described.

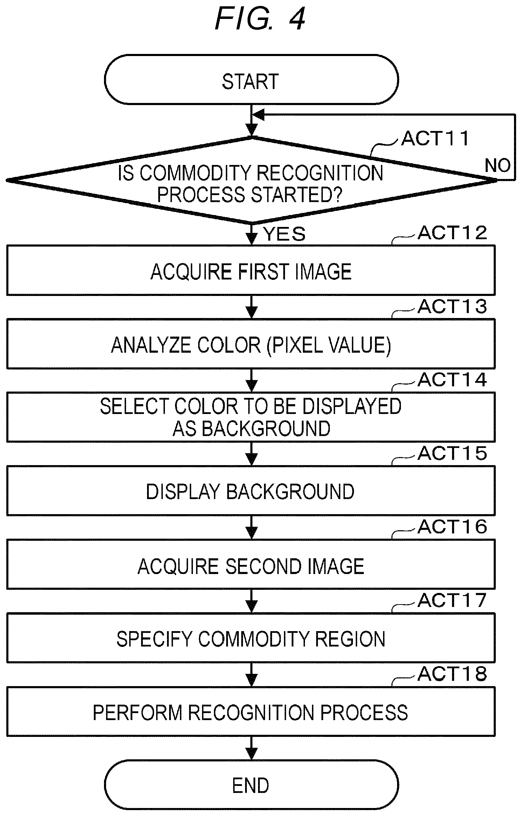

FIG. 4 is a flowchart showing an operation example of the commodity recognition device 1 according to the first embodiment.

In a standby state, the processor 21 of the processing unit 20 receives an instruction for starting a commodity recognition process (ACT11). For example, the processor 21 receives a start button for instructing the start of the commodity recognition process. The start button is a button for instructing the start of the commodity recognition process with respect to a commodity mounted on the mounting surface of the commodity mounting stand 3.

For example, it is assumed that the start button is an icon displayed by the display device of the operation panel 5. The touch panel of the operation panel 5 detects an input to the start button displayed as an icon. The start button may be instructed by other operation methods. In addition, an instruction for starting the commodity recognition process may be an operation other than the input to the start button. For example, the processor 21 may start the commodity recognition process when a detector such as a sensor detects that a commodity is mounted on the mounting surface of the commodity mounting stand 3.

When an instruction for starting the commodity recognition process is not given (ACT11, NO), the processor 21 of the processing unit 20 stands by in a state where an instruction for starting the commodity recognition process is received. When an instruction for starting the commodity recognition process is given (ACT11, YES), the processor 21 acquires a captured image obtained by the camera 4 as a first image through the camera interface 25 (ACT12) . For example, the processor 21 instructs the camera 4 to capture an image as the first image in a state where the display of an image by the display device 3a of the commodity mounting stand 3 is turned off. The camera 4 captures an image of an imaging range including the mounting surface of the commodity mounting stand 3 (display screen) in response to an instruction received from the processor 21. The camera 4 supplies the captured image to the processing unit 20 as the first image through the camera interface 25.

Meanwhile, when the camera 4 captured the first image, the processor 21 may perform control so that the display device 3a of the commodity mounting stand 3 displays a predetermined color (for example, white and black) on the entire display screen as a mounting surface. That is, the processor 21 may control the display device 3a of the commodity mounting stand 3 so that the color of a commodity mounted on the mounting surface can be determined from the first image captured by the camera 4.

When the first image is acquired, the processor 21 of the processing unit 20 analyzes a color (pixel value) in the acquired first image (ACT13). The processor 21 selects a color to be displayed as a background on the basis of analysis results of the color in the first image (ACT14) . For example, the processor 21 searches for a pixel value indicating a color which is not present in the image from the first image as color analysis. The first image includes an image of a commodity mounted on the mounting surface. Therefore, a color which is not present in the first image is a color which is not included in the commodity mounted on the mounting surface. A method of searching for a pixel value indicating a color which is not present in the first image (a color analysis method) includes a method of counting pixel values indicating colors which are present in the image.

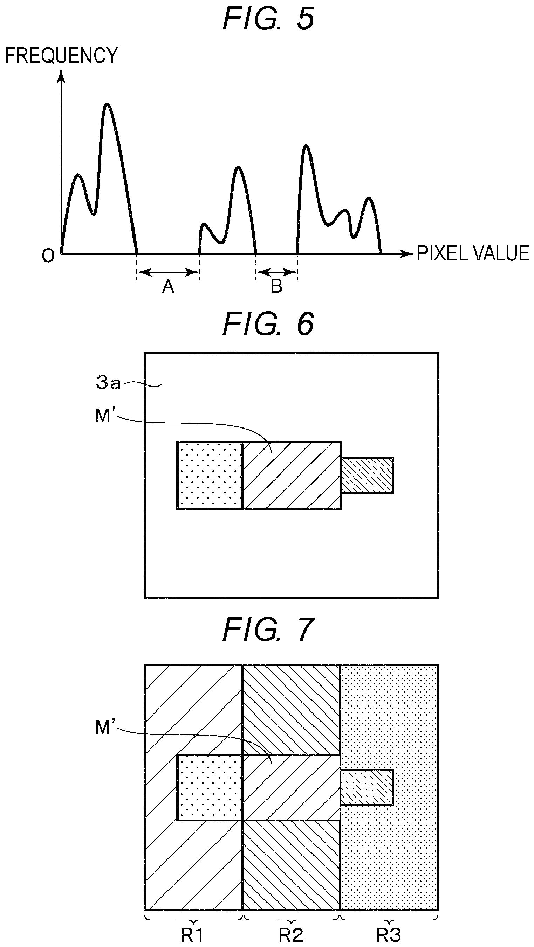

FIG. 5 is a diagram showing an example of a method of analyzing a color in an image.

In the example shown in FIG. 5, the processor 21 creates a histogram by counting pixel values indicating colors which are present in a first image. The processor 21 searches (selects) for a pixel value indicating a color having a frequency of 0 in the created histogram. For example, a pixel value indicating a color having a frequency of 0 may be randomly selected out of a section A having a frequency 0 and a section B having a frequency 0 as shown in FIG. 5. In addition, a pixel value indicating a central color in the longest section having a frequency of 0 in the histogram (the section A having a frequency of 0 shown in FIG. 5) may be selected as a pixel value indicating a color having a frequency of 0. Thereby, the processor 21 can search for a pixel value indicating a color which is not present in the image from the first image.

In addition, a color to be displayed as a background may be selected by a method different from the above-described method. For example, regarding the color to be displayed as a background, a color which is a complementary color (opposite color) in the hue circle with respect to a representative color in the first image may be selected. In this case, as color analysis, a process of specifying a representative color in the first image is performed. Meanwhile, it is assumed that processes to be described in a second embodiment can be applied to a process of specifying a representative color of an image and a process of selecting a complementary color (opposite color) to a representative color.

When a color (pixel value) to be displayed as a background is selected on the basis of the first image, the processor 21 generates an image (background image) constituted by a selected color and causes the display device 3a of the commodity mounting stand 3 to display the generated image (ACT15) . For example, the processor 21 supplies a background image, constituted by a color selected as a color which is not present in the first image, as an image for display to the display device 3a through the display I/F 26. Accordingly, the display device 3a displays the background image to be supplied from the processing unit 20 on the entire display screen as a mounting surface.

The processor 21 acquires a captured image obtained by the camera 4 as a second image through the camera interface 25 in a state where the mounting surface is displayed with a color selected on the basis of the first image (ACT16). For example, the processor 21 causes the display device 3a of the commodity mounting stand 3 to display the mounting surface (display screen) with a color selected on the basis of the first image. The processor 21 instructs the camera 4 to capture an image in a state where the mounting surface is displayed with a color selected on the basis of the first image. The camera 4 captures an image of an imaging range including the mounting surface on which the color selected on the basis of the first image is displayed, as a second image in response to an instruction received from the processor 21. The camera 4 supplies the captured image as the second image to the processing unit 20 through the camera interface 25 in a state where the mounting surface having the selected color displayed thereon is displayed.

When the second image is acquired, the processor 21 of the processing unit 20 specifies a commodity region from the acquired second image (ACT17) . For example, the processor 21 extracts a commodity region by extracting an image other than a color displayed on the mounting surface by the display device 3a from the second image. Since the second image is an image captured in a state where the mounting surface is displayed with a color selected on the basis of the first image, a region other than a color displayed on the mounting surface is a region other than a background (that is, a commodity region). Further, in a method of specifying a commodity region, a background color is different from the color of the commodity region, and thus specification may be performed by a specification method using a concentration difference or using Deep Learning. In addition, the method of specifying a commodity region may be used in combination with some methods and is not limited to a specific method.

When a commodity region is specified, the processor 21 executes a recognition process for recognizing a commodity on the specified commodity region (ACT18). The processor 21 extracts image information for recognizing a commodity from an image of a commodity region and recognizes a commodity on the basis of the extracted image information as a recognition process. The image information includes a feature value indicating a feature of an image to be used for recognition. For example, the image information includes a local feature value indicating a local feature of the image and coordinate information of a feature point indicating the position thereof. In addition, the image information may include other pieces of information. In addition, the feature value indicating the feature of the image may be a concentration gradient of a commodity, a pattern of a texture, or the like. In addition, feature extraction for the feature value indicating the feature of the image may be performed using Deep Learning and is not limited to a specific method.

In addition, as a commodity recognition method for recognizing (identifying) a commodity in a recognition process, the above-described local feature value method using a local feature value as image information is applicable. In addition, the commodity recognition method may be an object recognition method using a texture pattern or the like or a recognition method using Deep Learning. Further, the commodity recognition method may be a method of acquiring a barcode region (barcode) by detecting a region having a strong high-frequency component from an image and decoding the acquired barcode. In this case, the processor 21 can recognize a commodity by collating a commodity code obtained by decoding a barcode with a commodity code registered in a commodity database. In addition, the commodity recognition method is not limited to a specific method, and some methods may be used in combination.

As described above, the commodity recognition device according to the first embodiment includes a display device that displays an image on a mounting surface on which a commodity is mounted. In the first embodiment, the commodity recognition device generates a background image constituted by a color selected (searched for) through color analysis for a first image acquired by a camera that images an imaging region including the mounting surface. The commodity recognition device specifies a commodity region from a second image captured by a camera in a state where a background image constituted by a color selected on the basis of the first image is displayed on the mounting surface. The commodity recognition device recognizes a commodity using image information of the specified commodity region.

Thereby, even when a commodity has luminance or color information similar to that of a background, it is possible to reliably specify a commodity region by changing a background to be displayed on a mounting surface on which the commodity is mounted. As a result, according to the first embodiment, it is possible to provide a commodity recognition device capable of improving the accuracy of recognition and a processing speed.

### Second Embodiment

Next, a second embodiment will be described.

It is assumed that the second embodiment is realized in the commodity recognition device 1 having the configuration shown in FIGS. 1 to 3 described in the first embodiment. For this reason, in the second embodiment, a detailed description of the configuration of the commodity recognition device 1 will be omitted. The commodity recognition device 1 according to the second embodiment divides a display screen of a display device 3a serving as a mounting surface on which a commodity is mounted into a plurality of regions and displays an image selected for each region obtained by the division.

FIG. 6 is a diagram showing an example of a commodity M' to be recognized.

The commodity M' shown in FIG. 6 has an appearance constituted by a plurality of regions of different colors. That is, in the commodity M', a plurality of regions constituted by different colors are mixed on a surface to be imaged. For this reason, when the entirety of a background on a mounting surface on which the commodity M' is mounted is constituted by one color, it may be difficult to specify a region of the commodity M' from a captured image obtained by a camera 4. For this reason, in the second embodiment, a region of a mounting surface on which an image is displayed by the display device 3a (a mounting region of a commodity, a display region of a background image) is divided into a plurality of regions, and a color to be displayed for each of the regions obtained by the division is selected. Thereby, even when the commodity M' has an appearance having a plurality of regions constituted by different colors, it is easy to specify a commodity region from a captured image.

FIG. 7 is a diagram showing an example in which a region of a mounting surface on which an image (background image) is displayed by the display device 3a is divided into three regions and a different color is displayed for each of the three regions obtained by the division.

As shown in FIG. 7, when a display region on a mounting surface on which the commodity M' is mounted is divided into three regions, the commodity recognition device 1 displays a color selected (set) for each of three regions R1, R2, and R3 obtained by the division. A color to be displayed in each region may be selected through the same color analysis as in the first embodiment. For example, a background image as shown in FIG. 7 is generated by dividing the first image into three regions, searching for a color which is not present in the image for each region, and displaying the searched color as a background of each region.

In addition, a color to be displayed as a background in each region may be a color for facilitating distinguishment between an image of a commodity and a background in each of the regions obtained by the division. Therefore, a color to be displayed as a background in each region may be selected by a method different from the color analysis described in the first embodiment.

In addition, the example shown in FIG. 7 is an example in which a region is divided into three regions, but a region to be divided may be appropriately set in accordance with an operation mode, a commodity to be recognized, or the like. For example, a region to be divided may be set more finely than the division into three regions as shown in FIG. 7. The more finely a region to be divided is set, the more reliably a commodity region can be specified even for a commodity having a plurality of products or an appearance having a complicated color configuration.

Next, operations of the commodity recognition device 1 according to the second embodiment will be described.

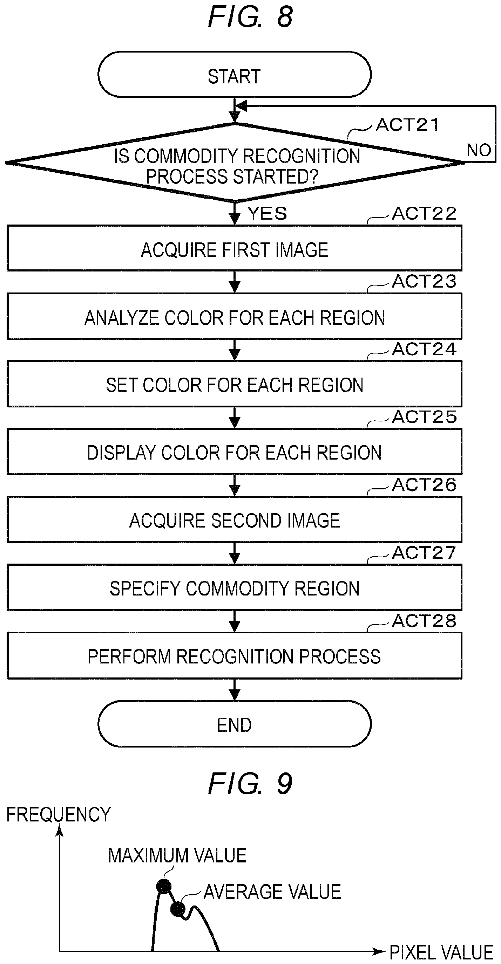

FIG. 8 is a flowchart showing an operation example of the commodity recognition device 1 according to the second embodiment.

In the second embodiment, a processor 21 of the commodity recognition device 1 receives an instruction for starting a commodity recognition process, similar to ACT11 described in the first embodiment (ACT21). When the instruction for starting a commodity recognition process is not input (ACT21, NO), the processor 21 stands by in a state where the instruction for starting a commodity recognition process is received. When the instruction for starting a commodity recognition process is received (ACT21, YES), the processor 21 acquires a captured image obtained by the camera 4 as a first image through the camera interface 25 (ACT22). The processing of ACT22 can be realized through processing similar to ACT12 described in the first embodiment.

When the first image is acquired, the processor 21 divides the first image into a plurality of regions and analyzes a color (pixel value) for each of the regions obtained by the division (ACT23). The processor 21 selects a color to be displayed as a background in each region on a mounting surface on the basis of results of the color analysis for each region (ACT24) . For example, the processor 21 may analyze a color in an image of each region by applying processing similar to ACT13 in the first embodiment to each region. In this case, the processor 21 selects a pixel value indicating a color to be displayed as a background in each region from results of color analysis for an image of each region.

In addition, color analysis for an image of each region is not limited to searching for a color which is not present in an image as described in the first embodiment. For example, as a color to be displayed as a background in each region, a color (a complementary color, an opposite color) indicating the vicinity of an opposite color in the hue circle with respect to a representative color in each region may be selected. In this case, as color analysis for each region, a process of specifying (searching for) a representative color in each of the regions obtained by the division in the first image is performed. Thereby, it is possible to increase a difference between an image (color) of a commodity and a background image and to specify a commodity region with high accuracy.

FIG. 9 is a diagram showing an example of a histogram for searching for a representative color from an image.

In the example shown in FIG. 9, as a color (pixel value) to be set as a representative color, a value which is a maximum value is selected from a frequency of the histogram in an image of a region obtained by the division. In addition, as a color (pixel value) to be set as a representative color, a frequency average value of the histogram in the image of the region obtained by the division may be selected as shown in FIG. 9.

Meanwhile, a color to be displayed as a background in each region may be selected on the basis of a color of an edge detected through edge detection performed within a region obtained by the division in the first image.

When a color to be displayed as a background for each region obtained by the division is selected, the processor 21 generates an image (background image) in which each region is displayed with a selected color (ACT25). When the background image is generated, the processor 21 supplies the background image as an image for display to the display device 3a through a display interface 26. Accordingly, the display device 3a displays the background image in which a color is set for each region obtained by the division on the display screen serving as a mounting surface (ACT26).

The processor 21 acquires a captured image obtained by the camera 4 as a second image through a camera I/F 25 in a state where a background image constituted by colors selected for respective regions is displayed on the mounting surface (ACT27). For example, the processor 21 instructs the camera 4 to capture an image in a state where the background image constituted by colors selected for respective regions is displayed on the mounting surface (display screen). The camera 4 captures an image of an imaging range including the mounting surface (display screen) as a second image in response to the instruction received from the processor 21. The camera 4 supplies the captured image as the second image to the processing unit 20 through the camera interface 25.

When the second image is acquired, the processor 21 of the processing unit 20 specifies a commodity region from the acquired second image (ACT28) . For example, the processor 21 extracts a commodity region from a difference between the second image and the background image constituted by colors selected for respective regions. Further, in a method of specifying a commodity region, specification may be performed by a specification method using a concentration difference or using Deep Learning. In addition, the method of specifying a commodity region may be used in combination with some methods and is not limited to a specific method.

When a commodity region is specified, the processor 21 executes a recognition process for recognizing a commodity on a specified commodity region (ACT29). As a recognition process for recognizing a commodity from an image of a commodity region, the process described in the first embodiment is applicable. For example, the processor 21 extracts image information for recognizing a commodity from an image of a commodity region and recognizes a commodity on the basis of the extracted image information as a recognition process.

As described above, the commodity recognition device according to the second embodiment includes a display device that displays an image on a mounting surface on which a commodity is mounted. In the second embodiment, the commodity recognition device selects a color to be displayed as a background for each of a plurality of regions obtained by the division on the basis of a first image acquired by a camera imaging an imaging region including the mounting surface, and generates a background image to be displayed with colors selected for the respective regions. The commodity recognition device specifies a commodity region from a second image captured by the camera in a state where the background image constituted by the colors selected for the respective regions is displayed and the background image. The commodity recognition device recognizes a commodity using image information of the specified commodity region.

Thereby, even when a commodity includes regions of colors which are mixed together, it is possible to reliably specify a commodity region by changing a color of a background to be displayed on the mounting surface for each divided region. As a result, according to the second embodiment, it is possible to provide a commodity recognition device capable of improving the accuracy of commodity recognition and improving a processing speed of a commodity recognition process.

### Third Embodiment

Next, a third embodiment will be described.

It is assumed that the third embodiment is realized in the commodity recognition device 1 having the configuration shown in FIGS. 1 to 3 described in the first embodiment. For this reason, in the third embodiment, a detailed description of the configuration of the commodity recognition device 1 will be omitted.

In the commodity recognition device 1 according to the third embodiment, a background image to be displayed on a display screen of a display device 3a serving as a mounting surface on which a commodity is mounted has a fixed pattern (form). For example, the commodity recognition device 1 specifies a pattern which is not present in an image from a captured image obtained by a camera 4. The commodity recognition device 1 displays an image constituted by the specified pattern on the display screen serving as a mounting surface as a background image. The commodity recognition device 1 specifies a commodity region by separating a region indicating a pattern to be displayed as a background image and the other region (commodity region) from each other.

Next, operations of the commodity recognition device 1 according to the third embodiment will be described.

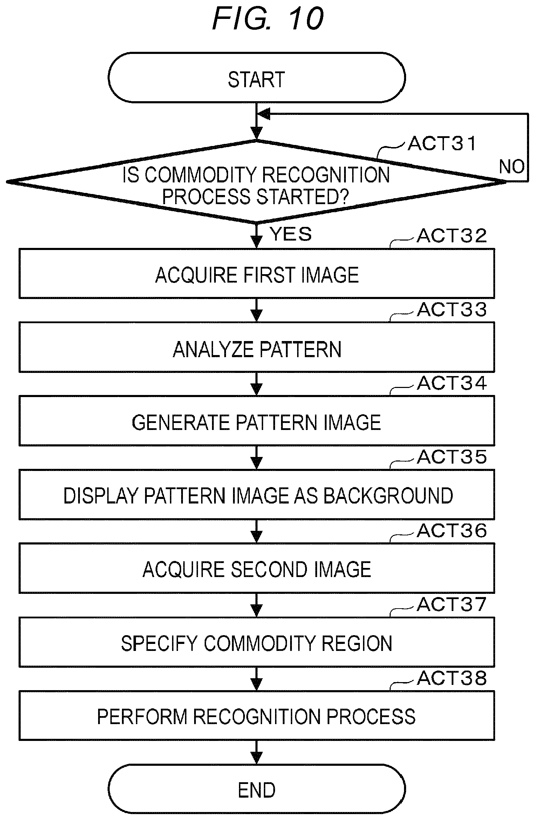

FIG. 10 is a flowchart showing an operation example of the commodity recognition device 1 according to the second embodiment.

In the second embodiment, a processor 21 of the commodity recognition device 1 receives an instruction for starting a commodity recognition process, similar to ACT11 described in the first embodiment (ACT31). When an instruction for starting a commodity recognition process is not given (ACT31, NO), the processor 21 stands by in a state where an input of an instruction for starting a commodity recognition process is waited for. When an instruction for starting a commodity recognition process is given (ACT31, YES), the processor 21 acquires a captured image obtained by the camera 4 as a first image through a camera interface 25 (ACT32). The processing of ACT32 can be realized through processing similar to ACT12 described in the first embodiment.

When the first image is acquired, the processor 21 analyzes a pattern (form) in the first image (ACT33). The processor 21 determines a pattern to be displayed as a background on the mounting surface on the basis of results of the analysis of the pattern for the first image (ACT34). The pattern analysis is a process of specifying a pattern of a commodity which is present in the first image. For example, as the pattern analysis, a process of detecting a straight line constituting the pattern of the commodity which is present in the first image is performed.

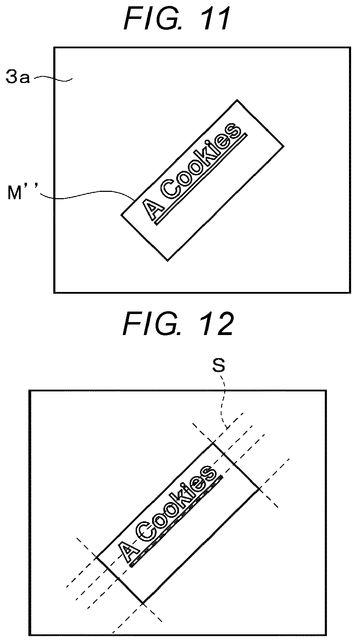

FIG. 11 is a diagram showing an example of a commodity M" to be recognized and mounted on a mounting surface of a commodity mounting stand 3. In addition, FIG. 12 is a diagram showing an example of a straight line s detected from a captured image obtained by imaging the commodity M" shown in FIG. 11.

For example, the processor 21 performs a process of detecting a straight line in the captured image (first image) as shown in FIG. 11. The processor 21 detects a plurality of straight lines s as shown in FIG. 12 through a process of detecting a straight line from a captured image as the first image. Here, a method of detecting a straight line from an image can be realized by applying image processing such as Hough transformation. However, the method of detecting a straight line from an image is not limited to a specific method.

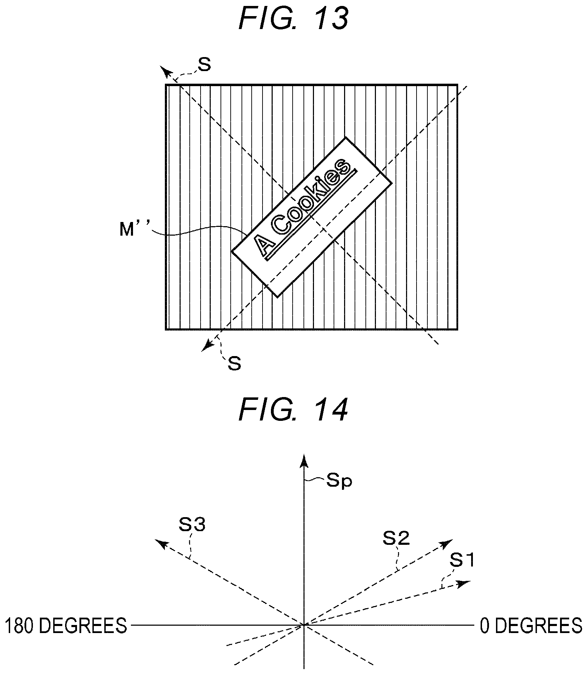

FIG. 13 is a diagram showing an example of a background image constituted by a pattern determined on the basis of the straight lines s detected as shown in FIG. 12.

FIG. 13 shows a state where an image constituted by a pattern including straight lines serving as directions other than straight line directions detected as shown in FIG. 12 is displayed as a background. That is, FIG. 13 shows an example in which a pattern to be displayed as a background is a pattern constituted by straight lines serving as directions other than straight line directions detected from the first image shown in FIG. 12. A background image shown in FIG. 13 does not include straight lines in directions consistent with the straight lines included in the commodity M" shown in FIG. 12. Thereby, a commodity region of the commodity M" can be reliably distinguished from the background image shown in FIG. 13.

Here, the directions of the straight lines constituting the pattern to be displayed as a background may be randomly selected from directions other than the straight line directions detected from the first image.

In addition, when straight lines in a plurality of directions are detected from the first image, directions of straight lines constituting a pattern to be displayed as a background may be determined in accordance with angles formed by the detected straight line directions, and the like.

FIG. 14 is a diagram showing an example of a method of determining directions of straight lines constituting a pattern to be displayed as a background when straight lines in three directions are detected from a first image.

As shown in FIG. 14, when straight lines in three directions (straight line directions s1, s2, and s3) are detected from the first image, directions of straight lines to be displayed as a pattern of a background may be determined from angles formed by the detected three straight line directions, and the like. As shown in FIG. 14, when the three straight line directions s1, s2, and s3 are made to intersect each other at a reference point (a starting point), an intermediate direction sp between two straight line directions having a largest angle (having different angles) among the adjacent straight line directions can be determined. In the example shown in FIG. 14, since an angle between the straight line direction s2 and the straight line direction s3 is largest, a straight line in the intermediate direction sp between the straight line direction s2 and the straight line direction s3 is determined as a pattern to be displayed as a background.

In addition, the pattern to be displayed as a background is not limited to a pattern constituted by straight lines as shown in FIG. 13. The pattern to be displayed as a background may be a pattern which is easily distinguished from an image of a commodity which is present in the first image.

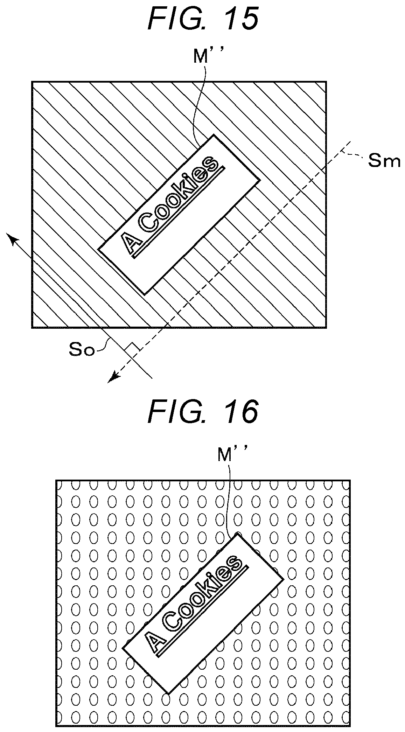

FIGS. 15, 16, and 17 are diagrams showing other examples of a pattern to be displayed as a background.

FIG. 15 shows an example in which a straight line so in a direction orthogonal to a direction of a straight line sm detected the most is set to be a pattern to be displayed as a background when a plurality of straight lines in the same direction are detected from a first image.

In this case, for example, the processor counts the number of straight lines detected from the first image and specifies a direction sm of a straight line detected the most. When the direction sm of the straight line detected the most is specified, the processor sets the straight line so in a direction orthogonal to the direction sm of the straight line detected the most to be a pattern to be displayed as a background. When the processor 21 determines a direction of a straight line set to be a pattern to be displayed as a background, the processor generates a background image constituted by the straight lines so in the determined direction.

FIG. 16 is a diagram showing an example of a background image when a pattern to be displayed as a background is set to be a pattern constituted by an ellipse.

In this case, the processor 21 specifies, for example, an ellipse of a shape which is not present in the first image. When an ellipse which is not present in the first image is specified, the processor 21 sets the specified ellipse to be a pattern to be displayed as a background. When the processor 21 determines an ellipse set to be a pattern to be displayed as a background, the processor generates a background image constituted by the determined ellipse.

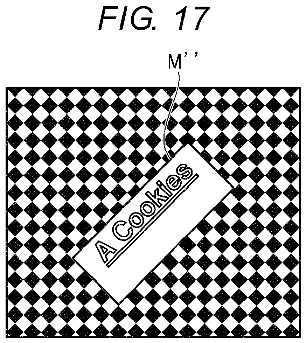

In addition, FIG. 17 is a diagram showing an example of a background image when a pattern to be displayed as a background is set to be a lattice-shaped pattern constituted by a rectangle.

In this case, the processor 21 specifies a rectangle having an aspect ratio which is not present in the first image. When the rectangle which is not present in the first image is specified, the processor 21 sets the specified rectangle to be a pattern to be displayed as a background. The processor 21 generates a background image constituted by a rectangle set to be a pattern to be displayed as a background. In the example shown in FIG. 17, an image in which rectangles set to be patterned to be displayed as a background are arranged in a lattice shape is set to be a background image.

Meanwhile, the third embodiment may be implemented in combination with the second embodiment. That is, as described in the second embodiment, a pattern set to be a background may be determined for each region obtained by the division, and a background image may be generated using the pattern which is set for each region.

When a pattern to be displayed as a background is determined, the processor 21 generates an image (background image) for displaying a determined pattern as a background (ACT35). When the background image is generated, the processor 21 supplies the generated background image as an image for display to the display device 3a through a display interface 26 (ACT36). Accordingly, the display device 3a displays the background image constituted by the pattern determined on the basis of the first image on the display screen serving as a mounting surface on which a commodity is mounted.

The processor 21 acquires a captured image obtained by the camera 4 through a camera I/F 25 in a state where the background image constituted by the pattern determined on the basis of the first image is displayed on the mounting surface (ACT37). For example, the processor 21 displays the background image constituted by the pattern determined on the basis of the first image on the mounting surface and instructs the camera 4 to capture an image. The camera 4 captures an image of an imaging range including the mounting surface as a second image in response to the instruction received from the processor 21. The camera 4 supplies the captured image as the second image to the processing unit 20 through the camera interface 25.

When the second image is acquired, the processor 21 of the processing unit 20 specifies a commodity region from the acquired second image (ACT38) . For example, the processor 21 extracts a commodity region from a difference between the second image and the background image.

When the commodity region is specified, the processor 21 executes a recognition process for recognizing a commodity on the specified commodity region (ACT39). The processor 21 recognizes a commodity from an image of the commodity region through the recognition process as described in the first embodiment.

As described above, the commodity recognition device according to the third embodiment includes a display device that displays an image on a mounting surface on which a commodity is mounted. In the third embodiment, the commodity recognition device determines a pattern to be displayed as a background on the basis of a first image acquired by a camera that images an imaging region including a mounting surface. The commodity recognition device specifies a commodity region from a second image captured by the camera in a state where a background image constituted by the determined pattern is displayed and the background image. The commodity recognition device executes a commodity recognition process on the specified commodity region.

Thereby, even when a commodity has various patterns, it is possible to reliably specify a commodity region by changing a pattern to be displayed on a mounting surface on which the commodity is mounted. As a result, according to the third embodiment, it is possible to provide a commodity recognition device capable of improving the accuracy of a commodity recognition process and improving a processing speed of the commodity recognition process.

As described above, in each of the commodity recognition devices according to the embodiments, a commodity mounting stand includes a display device, and a display screen of the display device serves as a mounting surface on which a commodity is mounted. The commodity recognition device controls an image (a color, a pattern, or the like) to be displayed by the display device and performs a process of specifying a commodity region from a captured image. Thereby, each of the commodity recognition devices according to the embodiments can reliably separate a background and a commodity from each other from the captured image and can specify a commodity region as preprocessing for recognizing a commodity with high accuracy. As a result, the commodity recognition device can not only improve the accuracy of commodity recognition but also improve a processing speed of commodity recognition.

Further, each of the commodity recognition devices according to the embodiments controls an image to be displayed by the display device of the commodity mounting stand on the basis of a captured image and then performs a process of specifying a commodity region from the obtained captured image. Thereby, even when a commodity has a luminance, a color, or a pattern similar to that of a background, the commodity recognition device can reliably specify a region of the commodity. As a result, the commodity recognition device can improve the accuracy of commodity recognition.

Meanwhile, in the above-described embodiments, a case where a program executed by a processor is stored in a memory inside a device in advance is described. However, the program executed by the processor may be downloaded to the device from a network or may be installed in the device from a storage medium. The storage medium may be a storage medium, such as a CD-ROM, which can store a program and can be read by the device. In addition, functions obtained by being installed in advance or downloaded may be realized in cooperation with an operating system (OS) inside the device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions, as defined by the appended claims. The accompanying claims and their equivalents are intended to cover such forms or modifications as would fall within the scope of the inventions.

## Claims

1. A commodity recognition device, comprising:
a first interface which acquires an image captured by a camera for which a region including a mounting surface on which a commodity to be recognized is mounted is set to be an imaging region;
a second interface which outputs an image for display to a display that displays an image on the mounting surface; and
a processor which
generates a background image to be displayed on the mounting surface on the basis of a first image captured by the camera and acquired by the first interface,
acquires a second image captured by the camera using the first interface in a state where the background image to be output as the image for display from the second interface is displayed on the mounting surface by the display, and
specifies a region of a commodity mounted on the mounting surface from the second image.

2. The device according to claim 1, wherein the processor further
searches for a color distinguishable from the commodity mounted on the mounting surface from the first image, and
generates a background image to be displayed on the mounting surface using the color.

3. The device according to claim 1 or 2, wherein the processor further
divides the first image into a plurality of regions, and
generates a background image to be displayed on the mounting surface using a color selected for each of the regions obtained by the division.

4. The device according to any of claims 1 to 3, wherein the processor further
determines a pattern distinguishable from the commodity mounted on the mounting surface from the first image, and
generates a background image to be displayed on the mounting surface using the pattern.

5. The device according to any of claims 1 to 4, wherein the processor searches for a pixel value indicating a color which is not present in the image from the first image.

6. The device according to any of claims 1 to 5, wherein the camera is positioned above the mounting surface.

7. The device according to any of claims 1 to 6, further comprising:
a detector which detects that the commodity is present or absent on the mounting surface.

8. A commodity recognition method, comprising:
acquiring a first image captured by a camera for which a region including a mounting surface on which a commodity to be recognized is mounted is set to be an imaging region;
generating a background image to be displayed on the mounting surface on the basis of the first image captured by the camera;
displaying the background image on the mounting surface;
acquiring a second image captured by the camera in a state where the background image is displayed on the mounting surface; and
specifying a region of a commodity mounted on the mounting surface from the second image.

9. The method according to claim 8, further comprising:
searching for a color distinguishable from the commodity mounted on the mounting surface from the first image, and
generating a background image for display on the mounting surface using the color.

10. The method according to claim 8 or 9, further comprising:
dividing the first image into a plurality of regions, and
generating a background image for display on the mounting surface using a color selected for each of the regions obtained by the division.

11. The method according to any of claims 8 to 10, further comprising:
determining a pattern distinguishable from the commodity mounted on the mounting surface from the first image, and
generating a background image for display on the mounting surface using the pattern.

12. The method according to any of claims 8 to 11, further comprising:
searching for a pixel value indicating a color which is not present in the image from the first image.

13. The method according to any of claims 8 to 12, further comprising:
detecting the presence or absence of the commodity on the mounting surface.

14. A self-checkout machine, comprising:
a settlement processing component;
a first interface which acquires an image captured by a camera for which a region including a mounting surface on which a commodity to be recognized is mounted is set to be an imaging region;
a second interface which outputs an image for display to a display that displays an image on the mounting surface; and
a processor which
generates a background image to be displayed on the mounting surface on the basis of a first image captured by the camera and acquired by the first interface,
acquires a second image captured by the camera using the first interface in a state where the background image to be output as the image for display from the second interface is displayed on the mounting surface by the display, and
specifies a region of a commodity mounted on the mounting surface from the second image.

15. The self-checkout machine according to claim 14, wherein the processor further
searches for a color distinguishable from the commodity mounted on the mounting surface from the first image, and generates a background image to be displayed on the mounting surface using the color.
